Europäisches Patentamt

European Patent Office

Office européen des brevets

(11) Numéro de publication: **0 406 085 A1**

## DEMANDE DE BREVET EUROPEEN

(21) Numéro de dépôt: **90401797.7**

(22) Date de dépôt: **25.06.90**

(51) Int. Cl.5: **F16D 3/40, B60T 1/06**

(30) Priorité: **26.06.89 FR 8908463**

(43) Date de publication de la demande:
**02.01.91 Bulletin 91/01**

(84) Etats contractants désignés:
**AT BE CH DE ES GB IT LI NL SE**

(71) Demandeur: **LABAVIA S.G.E.**
**5, avenue Newton Parc d'Activités**
**F-78180 Montigny le Bretonneux(FR)**

(72) Inventeur: **Rugraff, Guy**
**14 rue des Grilles**
**F-93500 Pantin(FR)**

(74) Mandataire: **Behaghel, Pierre et al**
**CABINET PLASSERAUD 84 rue d'Amsterdam**
**F-75009 Paris(FR)**

(54) Joint de cardan court et transmission de véhicule équipée d'un tel joint et de préférence d'un ralentisseur électrique.

(57) Il s'agit d'un joint de cardan comprenant une première fourche (2) solidaire d'une bride d'assemblage (1), une seconde fourche (4) solidaire d'un tronçon d'arbre (5) et un croisillon (6) dont les quatre tourillons (7,8) sont montés deux à deux sur les deux fourches avec interposition de roulements à aiguilles ou analogues. La bride (1) solidaire de l'une de ses deux fourches (2) est évidée axialement de part en part par deux lumières (9) propres à recevoir les bras de l'autre fourche (4) lorsque l'angle de pliage du joint est grand. Le choix d'un tel joint est particulièrement recommandé pour équiper les transmissions de véhicules ultra-courtes équipées de ralentisseurs électriques.

FIG.1.

## JOINT DE CARDAN COURT ET TRANSMISSION DE VÉHICULE ÉQUIPÉE D'UN TEL JOINT ET DE PRÉFÉRENCE D'UN RALENTISSEUR ÉLECTRIQUE.

L'invention est relative aux joints de cardan comprenant une première fourche ou mâchoire solidaire d'une bride d'assemblage, une seconde fourche ou mâchoire solidaire d'un tronçon d'arbre et un croisillon dont les quatre tourillons sont montés deux à deux sur les deux fourches avec interposition de roulements à aiguilles ou analogues.

Elle concerne également les transmissions équipées de tels joints de cardan, transmissions destinées à transmettre les couples moteurs des boîtes de vitesse aux ponts des véhicules.

Pour certaines de ces transmissions, on cherche à raccourcir au maximum la distance $d_1$ comprise entre le centre 0 du tourillon et la face d'application F de la bride du joint contre la bride associée de la transmission.

C'est en particulier le cas pour certaines transmissions équipées de ralentisseurs électriques à courants de Foucault, car un tel équipement allonge la transmission et cet allongement peut poser de sérieux problèmes.

C'est ainsi que, dans les autocars modernes à moteur arrière, la longueur hors tout de l'ensemble moteur-boîte et celle du pont arrière, notamment du type hypoïde, ont augmenté ces derniers temps sans que soient modifiés les emplacements respectifs de ces organes.

Or, dans les transmissions considérées équipées de ralentisseurs électriques, le rotor du ralentisseur est généralement monté sur une "bride de boîte" qui est disposée en porte-à-faux à la sortie d'un "nez" compris par le carter de la boîte de vitesses et qui est prolongée par un manchon cannelé emmanché à force sur un embout cannelé complémentaire intérieur à la boîte.

C'est alors contre la face extérieure de cette bride de boîte qu'est montée la bride du joint à cardan le plus proche de cette boîte.

Or, la distance $d_2$ entre la face extérieure F de montage de ladite bride de boîte et le plan frontal P, de la boîte, contre lequel est appliquée la monture comprenant le nez ci-dessus ne peut pas être réduite en deçà d'une valeur relativement grande dès lorsque ladite bride de boîte doit supporter le rotor d'un ralentisseur électrique.

A titre indicatif, on signale que cette distance $d_2$ est par exemple de l'ordre de 115 mm pour un ralentisseur dont le diamètre extérieur est de l'ordre de 500 mm.

L'un des buts essentiels de l'invention est de raccourcir au maximum la distance D composée de la somme des deux distances $d_1$ et $d_2$ ci-dessus, c'est-à-dire la distance comprise entre le centre 0 du croisillon et le plan P.

A cet effet on agit sur la distance $d_1$.

Pour donner à cette distance $d_1$ une valeur particulièrement faible, les joints de cardan du genre ci-dessus selon l'invention sont essentiellement caractérisés en ce que la bride solidaire de l'une de leurs deux fourches, bride qui, d'une façon connue en soi, présente une face terminale plate ou sensiblement telle et est perforée par des trous de fixation, est évidée axialement de part en part par deux lumières propres à recevoir les bras de l'autre fourche lorsque l'angle de pliage du joint est grand, lumières séparées l'une de l'autre par une entretoise centrale.

Dans des modes de réalisation préférés, on a recours en outre à l'une et/ou à l'autre des dispositions suivantes :

- le contour de la face terminale plate de la bride du joint est circulaire,
- la fourche solidaire de la bride du joint est constituée par deux oreilles parallèles évidées respectivement par deux paliers coaxiaux et les bases de ces deux oreilles sont reliées entre elles par trois entretoises parallèles délimitant deux à deux les lumières ci-dessus,
- l'entretoise centrale présente la forme d'un barreau cylindrique épais dont la section droite présente la forme générale d'un triangle curviligne,
- les deux entretoises extrêmes sont délimitées extérieurement par une face cylindrique de révolution autour de l'axe de la bride et intérieurement par des portions d'une sphère centrée sur le centre du croisillon,
- la bride de la transmission sur laquelle est fixée la bride du joint à cardan est elle-même évidée par deux alvéoles disposés en regard des lumières ajourées dans la bride du joint et propres à recevoir, eux aussi, les bras de l'autre fourche lorsque l'angle de pliage du joint est grand,
- dans une transmission de véhicule équipée d'au moins un joint de cardan du genre défini ci-dessus fixé sur une "bride de boîte" portant le rotor d'un ralentisseur électrique, le montage de ce rotor sur ladite bride de boîte est effectué sur une périphérie élargie de cette bride, par l'intermédiaire d'un intercalaire tubulaire du genre de ceux qui ont été décrits dans le brevet FRANCE n° 89 08045.

L'invention comprend, mises à part ces dispositions principales, certaines autres dispositions qui s'utilisent de préférence en même temps et dont il sera plus explicitement question ci-après.

Dans ce qui suit l'on va décrire un mode de réalisation de l'invention en se référant aux dessins ci-annexés d'une manière bien entendu non limitative.

La figure 1, de ces dessins, montre en coupe axiale une partie, d'une transmission de véhicule, équipée d'un ralentisseur électrique et comportant un joint de cardan conforme à l'invention.

Les figures 2 et 3 montrent à plus grande échelle, respectivement en vue en bout selon la flèche II de la figure 3 et en coupe axiale selon III-III figure 2, l'une des pièces constitutives dudit joint de cardan.

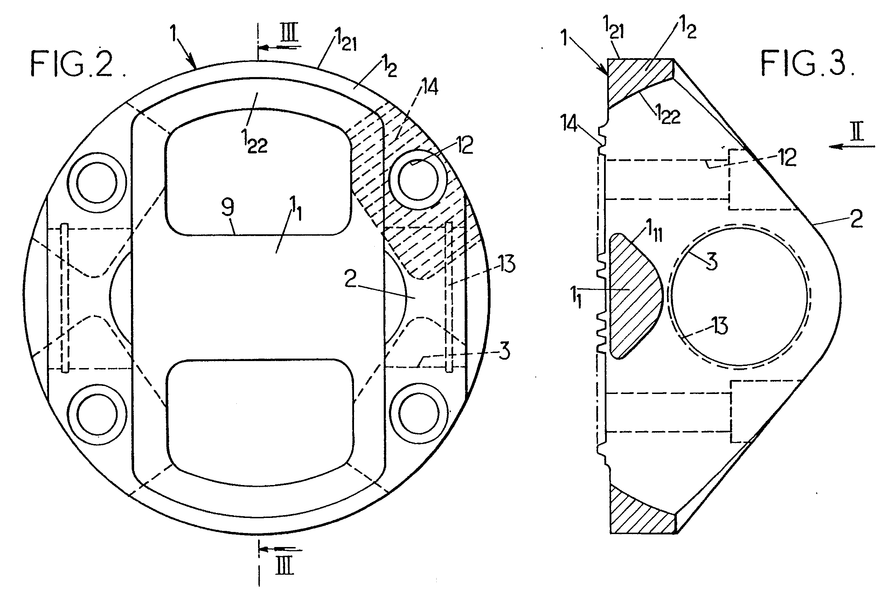

Le joint de cardan en question comprend :
- une bride de fixation 1 solidaire d'une première fourche 2 définissant deux paliers 3 (figures 2 et 3), ladite bride présentant une face transversale terminale plate ou sensiblement plate à contour généralement circulaire propre à être appliquée axialement contre une face transversale plate complémentaire d'une autre bride décrite plus loin,
- une seconde fourche 4 définissant deux autres paliers (non représentés) et solidaire d'un tronçon d'arbre 5,
- et un croisillon 6 comprenant quatre tourillons 7,8 propres à coopérer respectivement deux à deux avec les paliers des fourches 2 et 4 avec interposition de roulements à aiguilles ou analogues.

En général, ce joint est associé à un second joint identique prévu à l'extrémité axiale opposée du tronçon d'arbre 5, ce qui permet de réaliser une transmission homocinétique entre les deux brides extrêmes des deux joints de cardan, l'ensemble formant un arbre à double cardan.

Le problème qui se pose est celui de réduire au maximum la distance comprise entre le centre 0 du croisillon de l'un au moins des deux joints de cardan et la face plane F de montage de la bride correspondante de façon telle que, pour une distance donnée entre les deux faces de montage, généralement parallèles, des deux brides de l'arbre à double cardan, on conserve une distance maximum entre les centres des deux croisillons et on entrave le moins possible les débattements angulaires dudit arbre.

A cet effet, on évide axialement de part en part dans la bride 1 deux lumières 9 propres à recevoir les deux bras de la fourche 4 lorsque l'axe du tronçon d'arbre 5 est fortement incliné sur l'axe de la bride.

Dans le mode de réalisation préféré illustré, on évide en outre la bride 10 sur laquelle la bride de cardan 1 doit être fixée par des alvéoles 11 disposés en regard des lumières 9 et susceptibles de recevoir, comme ces lumières, les bras de la fourche 4.

Grâce à ces mesures, les déplacements angulaires du tronçon d'arbre 5 autour de l'axe commun aux deux tourillons 7 ne sont plus limités par butée des bras de ladite fourche 4 contre la bride 1, ce qui permet, toutes choses égales par ailleurs, de rapprocher le centre 0 de la face F, c'est-à-dire de diminuer la distance $d_1$.

C'est ainsi qu'à titre illustratif, avec une construction du genre de celle illustrée sur les dessins et correspondant aux cotes indiquées ci-dessus, il est possible de faire passer la valeur de ladite distance $d_1$ de 85 mm à 55 mm.

Le gain ainsi obtenu sur la distance axiale $d_1$ est doublé si les deux joints de cardan de l'arbre à double cardan considéré sont tous les deux construits de la manière indiquée ci-dessus.

Dans l'exemple numérique qui vient d'être indiqué, le gain axial obtenu est alors de 60 mm.

Dans le mode de réalisation illustré, la première fourche 2 est constituée par deux oreilles présentant la forme générale de plaques épaisses parallèles à contour triangulaire évidées par les paliers 3 et les bases de ces deux oreilles sont réunies entre elles par trois entretoises parallèles constitutives de la bride 1, savoir une entretoise centrale $1_1$ et deux entretoises de bordure $1_2$.

Ces trois entretoises délimitent entre elles deux à deux les lumières 9.

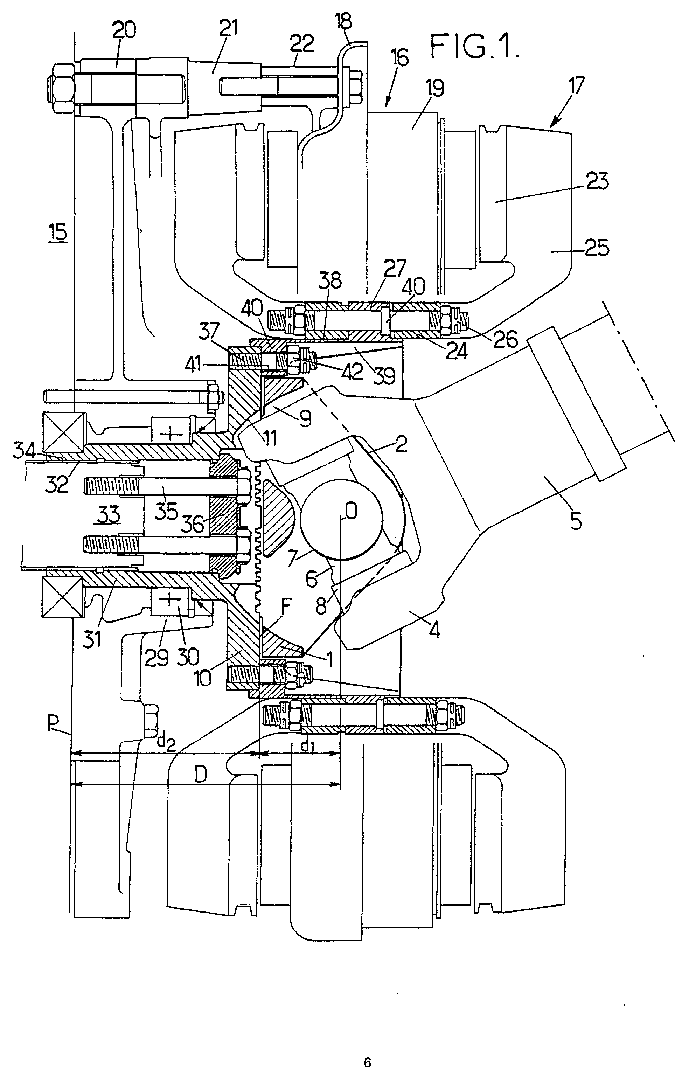

L'entretoise centrale $1_1$ se présente sous la forme d'un gros barreau rectiligne dont la section droite est délimitée par un triangle isocèle à angles arrondis : de la sorte, ce barreau présente en regard du croisillon des faces inclinées $1_{11}$, ce qui rend possible les débattements angulaires maximum de ce croisillon comme bien visible sur la figure 1.

Les entretoises de bordure $1_2$ sont limitées extérieurement par des portions d'une face cylindrique de révolution continue $1_{21}$ s'étendant sur tout le pourtour de la bride 1.

Elles sont délimitées intérieurement par des portions d'une face sphérique $1_{22}$ centrée sur le centre 0 du croisillon 6.

On voit en outre sur les figures 2 et 3 :
- des alésages étagés 12 évidés dans les oreilles 2, propres à recevoir des boulons ou goujons de fixation de la bride 1 sur la bride 10,
- des gorges annulaires 13 évidées dans les paliers 3 propres à recevoir des rondelles de blocage du type des circlips,
- et des dentures parallèles 14 prévues sur la face de fixation de la bride 1 et propres à coopérer avec des dentures complémentaires prévues sur la bride 10.

Le gain réalisé sur la distance $d_1$ est particulièrement précieux pour les transmissions de véhicules qui sont équipées de ralentisseurs électriques comme c'est le cas de celle, préférée, illustrée sur la figure 1.

Dans cette transmission, le ralentisseur électrique considéré est du type -connu sous la marque "FOCAL"- monté, avec un axe horizontal ou sensiblement horizontal, en porte-à-faux sur la sortie du carter 15 de la boîte de vitesses du véhicule considéré.

Ce ralentisseur comprend un stator inducteur 16 et un rotor induit 17.

Le stator 16 comprend un flasque de forme sensiblement annulaire 18 qui porte une couronne de bobines 19 en nombre pair agencées de façon à former par leurs extrémités deux suites annulaires de pôles magnétiques plans à polarités alternées de proche en proche.

Le flasque 18 est monté sur le carter de boîte 15 -ou plus précisément sur une monture intermédiaire 20 elle-même rapportée contre la face frontale plane P dudit carter 15- par l'intermédiaire d'une structure 21 en forme d'étoile ou de cloche ajourée et de cales tubulaires 22.

Le rotor 17 comprend quant à lui deux disques 23 en matériau ferromagnétique propres à encadrer axialement le stator et à défiler chacun en regard d'une suite de pôles de ce stator dont ils sont séparés par un faible jeu ou entrefer e .

Chaque disque 23 est relié à une bague de fixation 24 par une couronne de bras recourbés 25 formant ailettes de ventilation et les deux bagues 24 sont boulonnées à l'aide de systèmes boulons-écrous 26 sur un anneau intermédiaire 27.

La portion centrale de la monture de boîte 20 présente la forme d'un nez cylindrique 29 portant, par l'intermédiaire d'un roulement terminal 30, un manchon 31 dont l'extrémité axiale extérieure est prolongée radialement par la bride 10 appelée dans le présent texte "bride de boîte".

L'autre extrémité axiale du manchon 31 est cannelée intérieurement en 32 et est emmanchée à force sur l'embout 33 de la boîte, cannelé extérieurement en 34.

Cet emmanchement est réalisé à force pour éviter toute création de jeu et il est ensuite maintenu par vissage axial dans l'embout 33 de vis 35 dont les têtes sont appliquées contre une plaque 36 prenant elle-même appui sur le manchon 31.

L'anneau rotorique 27 est fixé sur la bride de boîte 10 de la manière qui a été explicitée dans le brevet ci-dessus mentionné.

En d'autres termes :
- la périphérie de cette bride 10 est agrandie et comprend une couronne d'éléments de fixation 37,
- et l'anneau 27 est une collerette extérieure prévue à une extrémité axiale d'un intercalaire tubulaire 38 nervuré intérieurement en 39 dont l'autre extrémité axiale est prolongée par une collerette interne 40 elle-même rapportée axialement contre la périphérie agrandie de la bride 10 et fixée sur cette dernière.

Ladite fixation est obtenue par coopération de moyens appropriés avec les moyens 37, ces moyens appropriés étant notamment des trous 41 et des écrous 42 si lesdits moyens 37 sont des goujons.

Comme indiqué plus haut, les mesures ci-dessus décrites permettent de donner une très faible valeur à la distance D comprise entre le plan P et le centre 0 du croisillon 6, cette distance pouvant être réduite à une valeur de 170 mm seulement pour un ralentisseur dont le diamètre est de l'odre de 500 mm : plus précisément, ladite distance D est composée de la distance $d_2$ comprise entre le plan P et la face d'application mutuelle F des deux brides 10 et 1, distance qu'il est difficile de réduire au-dessous de 115 mm lorsque la bride de boîte 10 supporte le rotor d'un ralentisseur, et de la distance $d_1$ comprise entre ladite face F et le centre 0, distance qui est ici réduite à la valeur très faible de 55 mm.

En suite de quoi, et quel que soit le mode de réalisation adopté, on dispose finalement d'un joint de cardan dont la distance entre la face d'application de la bride et le centre du croisillon est extrêmement faible, ce qui rend très avantageuse son utilisation dans une transmission équipée d'un ralentisseur électrique de type FOCAL lorsque cette transmission doit être extrêmement courte et donc rallongée au minimum par la mise en place d'un tel ralentisseur.

Il est à noter que l'évidement des lumières 9 dans la bride 1 affaiblit mécaniquement cette bride.

Mais cet affaiblissement ne présente aucun inconvénient véritable au plan de la transmission des couples moteurs du tourillon 6 à la bride de montage 10.

En effet la totalité de ces couples est transmise au niveau des deux oreilles 2 et c'est donc uniquement à la base de ces deux oreilles, entre ces bases et la bride de montage 10, qu'il est nécessaire de prévoir une grande section de métal mécaniquement résistant, ce qui est le cas.

En d'autres termes, les entretoises $1_1$ et $1_2$ n'ont ici pour rôle que de maintenir écartées et parallèles entre elles les deux oreilles 2, mais elles n'interviennent aucunement pour le transfert des couples.

Cette observation peut expliquer le préjugé qui pouvait exister avant l'invention vis-à-vis de l'évidement de la bride 1 ici revendiquée.

Comme il va de soi, et comme il résulte d'ailleurs déjà de ce qui précède, l'invention ne se limite nullement à ceux de ses modes d'application et de réalisation qui ont été plus spécialement envisagés elle en embrasse, au contraire, toutes les variantes, notamment celles où le joint de cardan à bride ajourée tel que défini ci-dessus, combiné éventuellement à une bride de montage alvéolée en correspondance, serait utilisé dans une transmission de véhicule non équipée d'un ralentisseur électrique de type FOCAL.

## Revendications

1. Joint de cardan comprenant une première fourche (2) solidaire d'une bride d'assemblage à face terminale plate (1) perforée par des trous de fixation (12), une seconde fourche (4) solidaire d'un tronçon d'arbre (5) et un croisillon (6) dont les quatre tourillons (7,8) sont montés deux à deux sur les deux fourches avec interposition de roulements à aiguilles ou analogues, caractérisé en ce que la bride (1) solidaire de l'une de ses deux fourches (2) est évidée axialement de part en part par deux lumières (9) propres à recevoir les bras de l'autre fourche (4) lorsque l'angle de pliage du joint est grand, lumières séparées l'une de l'autre par une entretoise centrale ($1_1$).

2. Joint de cardan selon la revendication 1, caractérisé en ce que le contour de la face terminale plate de la bride (1) du joint est circulaire.

3. Joint de cardan selon l'une quelconque des précédentes revendications, caractérisé en ce que la fourche (2) solidaire de la bride (1) du joint est constituée par deux oreilles parallèles évidées respectivement par deux paliers coaxiaux (3) et en ce que les bases de ces deux oreilles sont reliées entre elles par trois entretoises parallèles ($1_1$, $1_2$) délimitant deux à deux les lumières (9) ci-dessus.

4. Joint de cardan selon les revendications 2 et 3, caractérisé en ce que les deux entretoises extrêmes ($1_2$) sont délimitées extérieurement par une face cylindrique de révolution autour de l'axe de la bride (1) et intérieurement par des portions d'une sphère centrée sur le centre (0) du croisillon (6).

5. Joint de cardan selon l'une quelconque des revendications 3 et 4, caractérisé en ce que l'entretoise centrale ($1_1$) présente la forme d'un barreau cylindrique épais dont la section droite présente la forme générale d'un triangle curviligne.

6. Transmission de véhicule équipée d'au moins un joint de cardan selon l'une quelconques des précédentes revendications, comprenant une bride (10) sur laquelle est fixée la bride (1) dudit joint de cardan, caractérisé en ce que cette bride (10) est elle-même évidée par deux alvéoles (11) disposés en regard des lumières (9) ajourées dans la bride (1) du joint et propres à recevoir, eux aussi, les bras de l'autre fourche (4) lorsque l'angle de pliage du joint est grand.

7. Transmission de véhicule, notamment selon la revendication 6, équipée d'au moins un joint de cardan) selon l'une quelconque des revendications 1 à 5, fixé sur une "bride de boîte" (10) portant le rotor d'un ralentisseur électrique, caractérisé en ce que le montage de ce rotor sur ladite bride de boîte est effectué sur une périphérie élargie de cette bride, par l'intermédiaire d'un intercalaire tubulaire (38,39).

FIG.1.

FIG. 3.

FIG. 2.

7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-2 597 240  (GREINER) <br> * En entier * <br> --- | 1-7 | F 16 D   3/40 <br> B 60 T   1/06 |
| Y | US-A-2 058 819  (PADGETT) <br> * En entier * <br> --- | 1-7 | |
| Y | GB-A-  687 286  (HIRST) <br> * Page 1; figures 1,2,4A,4B * <br> --- | 2 | |
| Y | FR-A-2 163 977  (LABAVIA) <br> * En entier * <br> --- | 7 | |
| A | EP-A-0 094 468  (MESSERSCHMITT) <br> --- | | |
| A | DE-A-3 321 349  (UNI-CARDAN) <br> ----- | | |

DOMAINES TECHNIQUES
RECHERCHES (Int. Cl.5)

F 16 D   3/00
B 60 T

Le présent rapport a été établi pour toutes les revendications

| Lieu de la recherche | Date d'achèvement de la recherche | Examinateur |
|---|---|---|
| LA HAYE | 14-09-1990 | BALDWIN D.R. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
..................................................................................
& : membre de la même famille, document correspondant

EPO FORM 1503 03.82 (P0402)